Europäisches Patentamt

European Patent Office

Office européen des brevets

(11) Numéro de publication: **0 007 250**
A1

## (12) DEMANDE DE BREVET EUROPEEN

(21) Numéro de dépôt: **79400061.2**

(22) Date de dépôt: **30.01.79**

(51) Int. Cl.³: **A 63 G 25/00**
**B 60 K 1/02**

(30) Priorité: **06.02.78 FR 7803493**

(43) Date de publication de la demande:
**23.01.80 Bulletin 80/2**

(84) Etats Contractants Désignés:
**BE CH DE GB IT LU NL SE**

(71) Demandeur: **Guy, Marius**
**4, rue Corvisart**
**F-75013 Paris(FR)**

(71) Demandeur: **Auroy, Michel**
**Rue des Trois-Croix**
**F-45470 Trainou(FR)**

(72) Inventeur: **Guy, Marius**
**4, rue Corvisart**
**F-75013 Paris(FR)**

(72) Inventeur: **Auroy, Michel**
**Rue des Trois-Croix**
**F-45470 Trainou(FR)**

(74) Mandataire: **Tony-Durand, Serge**
**Cabinet Tony-Durand 22, Boulevard Voltaire**
**F-75011 Paris(FR)**

(54) **Véhicule électrique utilisable notamment comme engin d'attraction ou de manutention.**

(57) - Véhicule électrique utilisable notamment comme engin d'attraction dans les fêtes foraines, ou comme engin de manutention.

- Le véhicule comprend deux roues motrices 5 associées à un dispositif d'appui complémentaire, et disposées coaxialement suivant un axe perpendiculaire à la direction d'avancement du véhicule; un moteur 9 d'entraînement est associé à chaque roue 5 et est alimenté électriquement par l'intermédiaire d'une chaîne de commande électronique comprenant des convertisseurs de tension réglables, qui permettent de commander la vitesse de rotation de chaque roue de façon indépendante.

- Ce véhicule, utilisé comme auto-tamponneuse dans les manèges, peut se déplacer à une vitesse variable. Dans ses applications comme engin de manutention, il a l'avantage de pouvoir pivoter sur place dans un espace mininum.

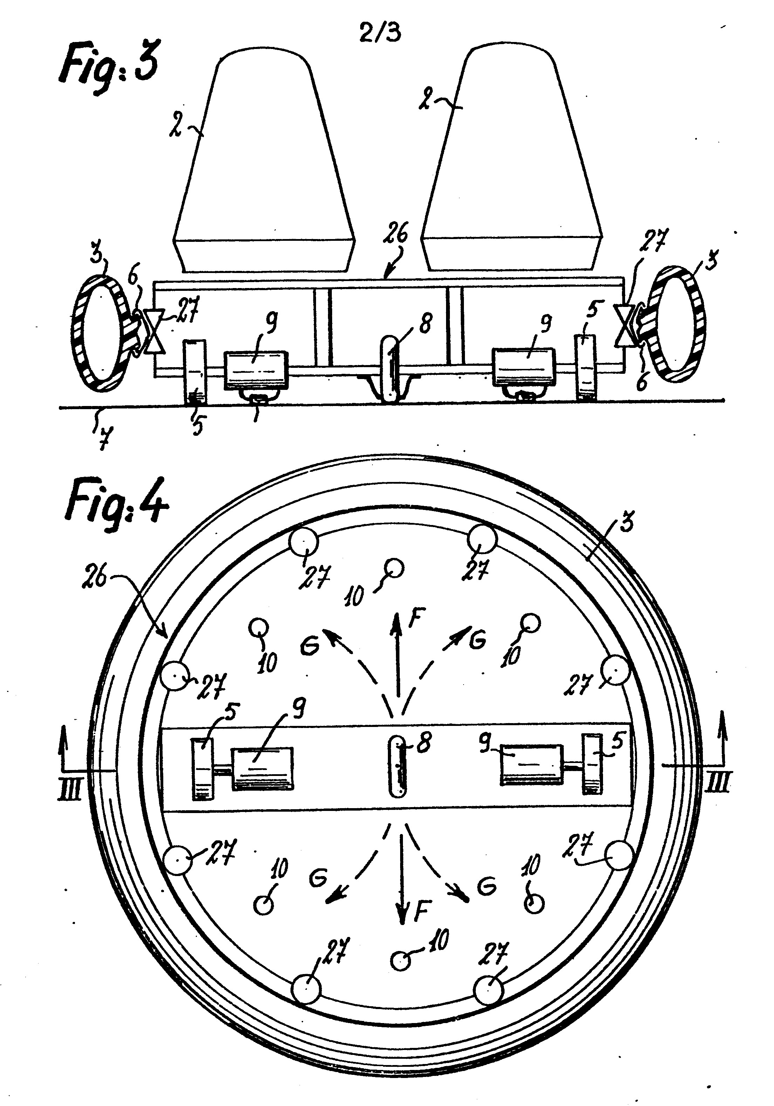

(voir Figure 4)

Fig:4

EP 0 007 250 A1

Croydon Printing Company Ltd.

<u>Véhicule électrique utilisable notamment comme engin</u>
<u>d'attraction ou de manutention</u> .

La présente invention a pour objet un véhicule électrique, utilisable notamment comme engin d'attraction ou de manutention. Par engin d'attraction, on entend les engins électriques dits "autos-tamponneuses" utilisés dans les manèges de fêtes foraines.

Les véhicules d'attraction pour fêtes foraines connus actuellement, ont une forme généralement ovale et se déplacent au moyen de trois roues dont deux non orientables situées à l'arrière, et une roue motrice unique orientable, située à l'avant. Cette roue est entraînée par un moteur électrique de traction, généralement à excitation série, alimenté en courant continu par une perche électrique en contact avec le plafond du manège.

En raison des caractéristiques de ce système de commande, il n'est pas possible de faire varier la vitesse de la roue et par conséquent du véhicule.

L'invention a pour but de réaliser un véhicule électrique capable notamment de se déplacer à une vitesse variable.

Conformément à l'invention, le véhicule comprend deux roues motrices associées à un dispositif d'appui complémentaire pour stabiliser le véhicule, ces roues étant disposées sur un axe perpendiculaire à la direction d'avancement dudit véhicule, et des moyens sont prévus pour entraîner les roues à des vitesses différentes afin de diriger le véhicule dans la direction voulue.

On comprend que si les roues sont entraînées à des vitesses égales et constantes, le véhicule se déplace en ligne droite, tandis que si les vitesses des roues sont différentes, le véhicule pivote suivant une trajectoire qui dépend de la différence entre les vitesses des roues. Il s'agit donc d'un mode de commande de direction complètement différent de celui des véhicules connus.

Suivant une première forme de réalisation de l'invention, dans laquelle le véhicule est alimenté en courant continu, un moteur d'entraînement est associé à chaque roue et est alimenté par l'intermédiaire d'une chaîne de commande électronique comprenant un convertisseur de tension réglable, notamment un hacheur à semi- conducteurs, tel qu'un hacheur à transistors.

Le convertisseur de tension réglable permet de faire varier la tension du moteur d'entraînement, et par conséquent la vitesse de rotation de la roue correspondante. Ceci constitue un avantage  lié à la commande électronique prévue par l'invention, tout en limitant les dépenses d'énergie.

Suivant une autre particularité de l'invention, un inverseur du sens de rotation du moteur de chaque chaîne de commande est interposé entre le convertisseur de tension et l'induit du moteur.

Cet agencement permet d'inverser le sens de rotation lorsque le courant s'annule, ce qui évite la formation d'arcs sur les bornes de contact de l'inverseur.

D'autres particularités et avantages de l'invention apparaîtront au cours de la description détaillée qui va suivre Aux dessins annexés, donnés à titre d'exemple non limitatif, on a représenté une forme de réalisation du véhicule selon l'invention.

- Les figures 1 et 2 sont des vues en perspective sous des angles différents, d'un mode de réalisation du véhicule visé par l'invention, réalisé sous forme d'un engin d'attraction pour fêtes foraines.

- La figure 3 est une vue en élévation et coupe du véhicule III-III de la figure 4.

- La figure 4 est une vue de dessus en plan du véhicule représenté à la figure 3.

- La figure 5 est un schéma électrique représentant la chaîne de commande du véhicule des figures 1 à 4.

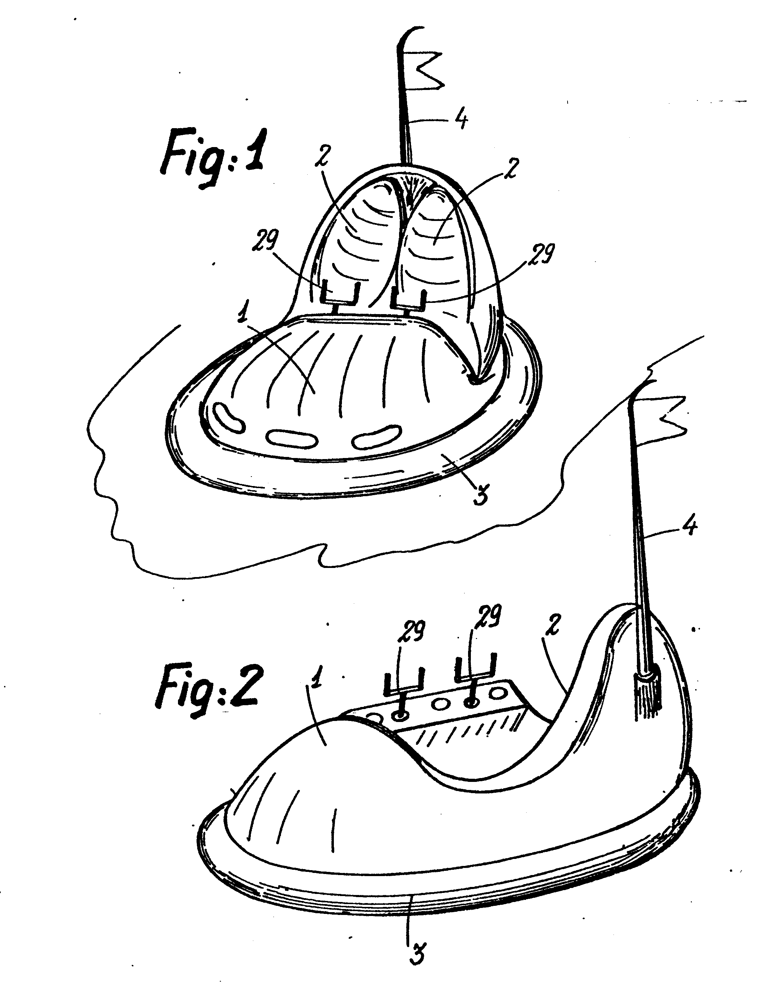

Le véhicule représenté aux figures 1 et 2 est un véhicule ou engin d'attraction du genre de ceux utilisés dans les manèges de fêtes foraines comme "autos-tamponneuses". Il comporte une carcasse métallique 1 dans laquelle sont logés les organes de commande, deux sièges 2 pour les passagers, et un bandage pneumatique 3 entourant sa base pour amortir les chocs.

Complémentairement, le véhicule est pourvu d'une perche ou rampe 4 d'alimentation en électricité par un grillage électrifié non représenté formant plafond.

Conformément à l'invention, le véhicule comprend deux roues motrices 5 (figures 3 et 4) associées à un dispositif d'appui complémentaire pour stabiliser le véhicule, ces roues 5 étant disposées coaxialement sur un axe perpendiculaire à la direction d'avancement du véhicule symbolisée par les flèches de sens opposés F. Des moyens sont complémentairement prévus pour entraîner les roues 5 à des vitesses différentes, afin de diriger le véhicule dans la direction voulue.

La base du véhicule est sensiblement circulaire, le bandage pneumatique périphérique 3, pourvu d'une chambre à air étant monté sur une jante 6, solidarisée avec un châssis intérieur 26 par un ensemble de galets amortisseurs 27. Le véhicule prend appui sur le plancher 7 du manège par un dispositif complémentaire des roues 5, constitué d'un ensemble de galets stabilisateurs 10, répartis de part et d'autre des roues 5.

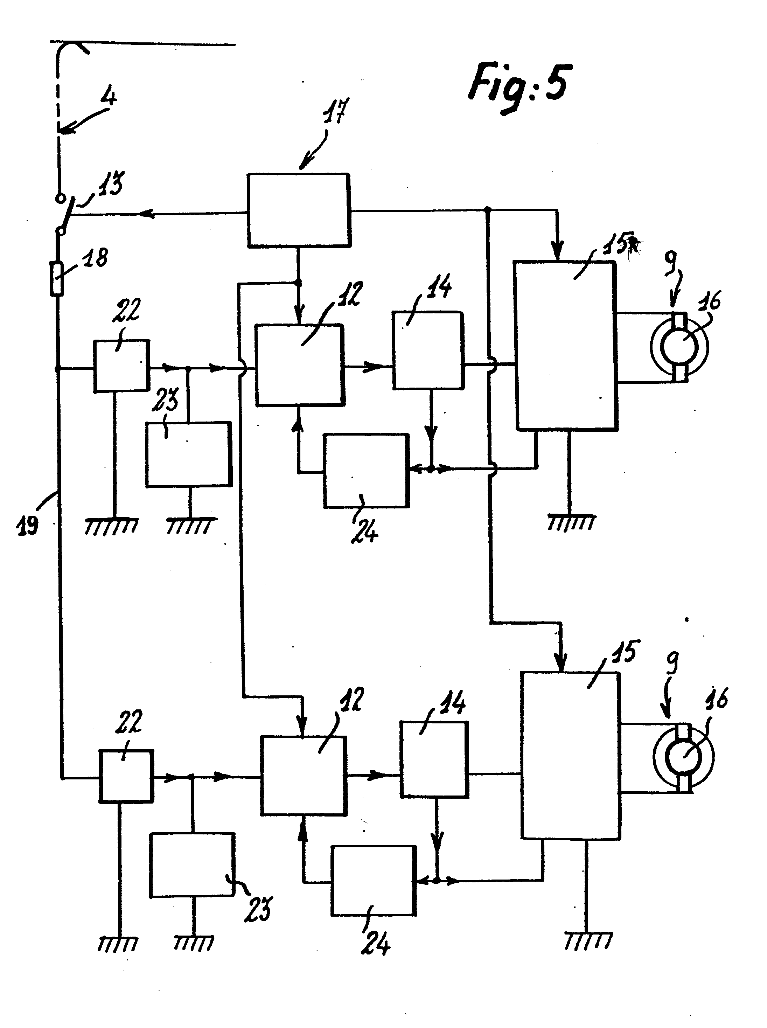

Dans le mode de réalisation représenté, un moteur d'entraînement distinct 9 est associé à chaque roue 5, et est alimenté en courant électrique par l'intermédiaire d'une chaîne de commande électronique représentée sur la figure 5. Chaque chaîne de commande désignée dans son ensemble par la référence 11 est constituée de la manière suivante : elle comprend un convertisseur statique de tension réglable 12, pouvant notamment être constitué par un hacheur à semi-conducteurs tel qu'un hacheur à transistors, relié d'une part à la perche électrique 4 avec interposition d'un interrupteur 13, et d'autre part à un organe de détection du courant 14. Celui-ci est à son tour connecté à un inverseur 15 du sens de rotation de l'induit 16 du moteur 9, cet inverseur coopérant avec l'induit 16 avec interposition d'un système de freinage électrique connu en soi. L'inverseur 15 assure donc la sélection du mouvement en marche avant, ou marche arrière.

Un dispositif de commande 17 agit sur les inverses 15, les convertisseurs 12, ainsi que sur l'interrupteur 13. Entre chaque convertisseur 12 et la connexion d'alimentation 19, sont interposés un filtre 22 et un organe 23 de protection contre les surtensions, un système de protection contre les surintensités 18 étant placé entre l'interrupteur 13 et la connexion d'alimentation 19.

Un limiteur de couple 24 incorporé à la chaîne électronique 11, contrôle la tension de sortie du convertisseur 12, afin d'empêcher tout dépassement des valeurs limites prédéterminées de courant et de couple, adaptées aux caractéristiques du moteur 9. Ce limiteur peut également être mécanique d'un type connu, incorporé au montage.

A titre d'exemple numérique indicatif, chaque moteur 9 a une puissance de 500 Watts et les deux moteurs peuvent entraîner le véhicule à une vitesse maximum de 25 km/h. Le convertisseur de tension 12 peut être réalisé de manière à fournir une tension de sécurité de 24 volts aux moteurs de tension correspondante.

Les deux roues motrices 5 sont placées aux extrémités d'un diamètre du châssis circulaire 26 coaxialement l'une à l'autre, de façon que leur axe commun soit orthogonal à la direction d'avancement du véhicule indiquée par les flèches F. Une roue libre 8 est montée au centre du véhicule dans l'axe des roues 5 et à égale distance de celles-ci, afin de fournir un appui supplémentaire au véhicule.

Le dispositif de commande comporte enfin deux manettes ou poussoirs manuels 29 accessibles des sièges 2, comme on le voit aux figures 1 et 2, chaque poussoir pouvant commander une chaîne de commande 11 auquel il est relié de façon connue en soi.

Le fonctionnement du véhicule conforme à l'invention est le suivant.

Quand le contact 13 est fermé, la perche 4 alimente les deux chaînes de commande 11 associées chacune à un moteur 9 et à une roue 5, ces dernières étant ainsi entraînées en rotation par les induits 16 à une vitesse qui dépend de la tension à la sortie des convertisseurs statiques 12. Ces tensions peuvent être réglées séparément par le ou les conducteurs du véhicule, par manoeuvre des poussoirs de commande 29.

Les manèges pour autos-tamponneuses dans les fêtes foraines sont généralement alimentés en courant continu, de sorte qu'il convient alors que les convertisseurs 12 soient corrélativement constitués par exemple par des hacheurs à transistors.

Si les tensions aux sorties des convertisseurs 12 sont égales, les roues 5 sont entraînées à des vitesses égales, et le véhicule se déplace dans l'un ou l'autre sens de marche avant et arrière, en fonction du sens de rotation des roues 5. Si les tensions à la sortie des convertisseurs 12 sont différentes, les induits 16 et par conséquent les roues associées 5 tournent à des vitesses différentes, de sorte que le véhicule parcourt une trajectoire incurvée, telle que l'une de celles symbolisées par les flèches G sur la figure 4. Bien entendu, le pivotement du véhicule se fait autour de la roue dont la vitesse est la plus faible. A la limite, si l'un des deux moteurs 9 est arrêté ou inversé tandis que l'autre entraîne la roue correspondante, le véhicule tourne sur lui-même, ce qui est particulièrement intéressant pour débloquer le véhicule dans des angles.

Cette faculté est particulièrement intéressante, dans le cas où le véhicule visé par l'invention est utilisé comme engin de manutention, celui-ci pouvant en effet manoeuvrer dans des espaces réduits au minimum.

Si les tensions à la sortie des convertisseurs 12 varient mais en restant égales entre elles, le véhicule parcourt une trajectoire rectiligne, et il ralentit ou au contraire accélère selon le sens de la variation des tensions appliquées aux moteurs 9. Dans le cas illustré aux figures où le véhicule est prévu comme engin d'attraction dans les fêtes foraines, l'utilisateur dispose donc d'une faculté qui n'est pas accessible avec les véhicules connus, dont la vitesse est constante.

Le convertisseur de tension 12 incorporé à la chaîne électronique 11 peut également fournir une tension d'utilisation de 24 volts aux moteurs 9, continue, à partir d'une tension continue de 110 volts, ou d'une tension alternative de 50-60 Hertz. Dans le second cas, les convertisseurs de tension 12 sont constitués par des hacheurs à thyristors.

Un autre avantage de la chaîne de commande 11 prévue par l'invention provient de l'information fournie par le détecteur d'intensité 14 au sélecteur de mouvement 15, afin d'inverser sans dommage le sens de rotation du moteur 9 intéressé.

Ainsi, un avantage essentiel de la commande électronique réalisée selon l'invention, est qu'elle permet de réguler la vitesse de rotation des roues, et par conséquent la vitesse du véhicule. Les réactions de celui-ci aux commandes par les poussoirs 29 sont inhabituelles par rapport à celles des véhicules automobiles connus. En particulier, une voiture automobile change de direction en fonction de la commande sur le volant, indépendamment de la vitesse, et elle reprend une trajectoire en ligne droite dès que l'action sur le volant cesse. Dans le véhicule selon l'invention, les ordres de commande sur chaque roue sont séparés, de sorte que l'importance des changements de direction dépend de la vitesse du véhicule, qui ne reprend pas une trajectoire rectiligne dès que les ordres de commande sont annulés. En effet, à la fin d'une commande pour un virage, l'inertie du véhicule continue à le faire tourner sur lui-même jusqu'à ce que l'énergie de rotation soit absorbée par les frottements, notamment des roues 5, 8, et des galets stabilisateurs 10 sur le plancher, ou compensée par un ordre de commande inverse capable de neutraliser l'énergie de rotation par inertie .

Aux frottements près, les réactions dynamiques du véhicule selon l'invention s'apparentent ainsi à celles d'un véhicule spatial.

L'invention n'est pas limitée à la forme de réalisation décrite, et peut comporter de nombreuses variantes d'exécution. On citera en particulier les suivantes.

Les leviers ou poussoirs 29 peuvent être associés à des détecteurs de proximité avec ou sans contact, ou être remplacés par des moyens plus habituels, tel que volant, pédales etc....

L'alimentation électrique peut être obtenue par des batteries, le véhicule étant alors autonome, ou à partir d'une source extérieure comme représenté aux figures. Dans ce cas, le contact peut être guidé, du type trolley, ou libre sur une surface conductrice, ou par câble.

La roue centrale 8 peut être supprimée, et les moteurs d'entraînement peuvent être du type à excitation série. Cependant, les moteurs à excitation séparée sont plus avantageux, en raison de leur temps de réponse plus court que celui des moteurs série pour les changements de direction.

On peut aussi munir chaque roue 5 de deux embrayages électromagnétiques reliés à un moteur unique d'entraînement, par l'intermédiaire de pignons, ce moteur pouvant lui-même être commandé par une chaîne mécanique connue en soi, ou par une chaîne électronique telle que celle représentée à la figure 5. La commande indépendante de chaque roue est alors exécutée au moyen d'impulsions corrélatives à l'ouverture et à la fermeture successives d'un contacteur associé à chaque roue. On peut également prévoir un moteur par embrayage électromagnétique.

Dans des chaînes mécaniques de commande, la liaison mécanique peut être obtenue par des relais, des limiteurs de couple et des freins à excitation. Mais de telles chaînes sont moins fiables que les chaînes électroniques.

Enfin, le contour du véhicule peut évidemment être quelconque, notamment dans ses applications comme engin de manutention.

REVENDICATIONS DE BREVET

1 - Véhicule électrique, utilisable notamment comme engin d'attraction ou de manutention, caractérisé en ce qu'il comprend deux roues motrices associées à un dispositif d'appui complémentaire pour stabiliser le véhicule, ces roues étant disposées sur un axe perpendiculaire à la direction d'avancement dudit véhicule, et en ce que des moyens sont prévus pour entraîner les roues à des vitesses différentes afin de diriger le véhicule dans la direction voulue.

2 - Véhicule selon la revendication 1, alimenté en courant continu, caractérisé en ce qu'un moteur d'entraînement est associé à chaque roue, et est alimenté par l'intermédiaire d'une chaîne de commande électronique comprenant un convertisseur de tension réglable, notamment un hacheur à semi-conducteurs tel qu'un hacheur à transistors.

3 - Véhicule selon la revendication 2, dans lequel chaque moteur est à excitation séparée, ou série, ou à aimant permanent caractérisé en ce qu'un inverseur du sens de rotation du moteur de chaque chaîne de commande est interposé entre le convertisseur de tension et l'induit du moteur.

4 - Véhicule selon les revendications 2 et 3, caractérisé en ce que la chaîne de commande de chaque moteur est pourvue d'un système de freinage électrique.

5 - Véhicule selon l'une des revendications 2 à 4, caractérisé en ce qu'un limiteur de couple est branché sur chaque convertisseur de tension afin de limiter la tension de sortie à une valeur prédéterminée, adaptée aux caractéristiques du moteur, ce limiteur étant électronique ou mécanique.

6 - Véhicule selon l'une des revendications 1 à 5, caractérisé en ce que sa base est sensiblement circulaire et en ce que les deux roues motrices sont placées approximativement aux extrémités d'un diamètre de cette base, le dispositif de commande de la direction étant muni de

0007250

manettes ou poussoirs manuels de manoeuvre, et des galets stabilisateurs étant de préférence prévus de part et d'autre des roues motrices.

7 - Véhicule selon la revendication 6, caractérisé en ce qu'il est équipé d'une roue libre placée entre les deux roues motrices.

8 - Véhicule selon la revendication 1, caractérisé en ce que chaque roue est munie de deux embrayages magnétiques reliés à au moins un moteur d'entraînement.

9 - Véhicule selon la revendication 1, alimenté en courant alternatif, caractérisé en ce qu'un moteur d'entraînement est associé à chaque roue et est alimenté par l'intermédiaire d'une chaîne de commande électronique comprenant un hacheur à thyristors réglable.

10 - Véhicule selon l'une des revendications 1 à 9, agencé pour être alimenté en courant continu ou alternatif, caractérisé en ce qu'il est équipé de deux convertisseurs de tension à raison d'un par moteur, qui abaissent la tension primaire à une très basse tension de sécurité.

Fig:1

Fig:2

0007250

**Fig.3**

**Fig.4**

*Fig:5*

0007250

**Office européen des brevets**

**RAPPORT DE RECHERCHE EUROPEENNE**

Numéro de la demande
EP 79 40 0061

| Catégorie | Citation du document avec indication, en cas de besoin, des parties pertinentes | Revendica-tion concernée | CLASSEMENT DE LA DEMANDE (Int. Cl.³) |
|---|---|---|---|
| X | <u>FR - A - 2 271 855</u> (MARY) <br> * Page 2, ligne 39 - page 3, ligne 12; page 3, ligne 29 - page 7, ligne 17 * | 1,2,3, 6,9 | A 63 G 25/00 <br> B 60 K 1/02 |
| X | <u>GB - A - 1 447 961</u> (SHEPPARD) <br> * Totalité * | 1,2,3, 4,6,7 | |
| | <u>DE - A - 2 002 632</u> (LICENTIA) <br> * Page 3, dernier paragraphe et page 4; page 7-17; figures * | 1,2,3, 4 | **DOMAINES TECHNIQUES RECHERCHES (Int. Cl.³)** <br><br> A 63 G <br> B 60 K <br> B 62 D |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 22-05-1979 | LEMERCIER |

OEB Form 1503.1 06.78